# EUROPÄISCHE PATENTSCHRIFT

(11) **EP 1 347 266 B1**
(45) Veröffentlichungstag und Bekanntmachung des Hinweises auf die Patenterteilung: **02.04.2008**
(21) Anmeldenummer: 03004878.9
(22) Anmeldetag: 06.03.2003
(51) Int. Cl.: G01B 11/00

(54) **Vorrichtung zum Vermessen eines Messobjekts**
Device for measuring an object
Dispositif de mesure d' un objet

(30) Priorität: 13.03.2002 DE 10211070
(43) Veröffentlichungstag der Anmeldung: 24.09.2003
(73) Patentinhaber: Gurny-Brösch, Andrea, 66346 Püttlingen (DE); Gurny, Patrick, 66119 Saarbrücken (DE); Gurny, Eric, 66740 Saarlouis (DE)
(72) Erfinder: Gurny, Werner, 66787 Wadgassen (DE); Gurny, Patrick, 66119 Saarbrücken (DE); Gurny, Eric, 66740 Saarlouis (DE)
(74) Vertreter: Söltenfuss, Dirk Christian

(56) Entgegenhaltungen:
- EP-A- 0 248 479
- EP-A- 0 279 347
- EP-A- 0 485 803
- DE-A1- 3 806 686
- DE-A1- 4 339 710
- US-A- 4 830 498
- US-A- 5 291 270

## Beschreibung

Die vorliegende Erfindung betrifft eine Vorrichtung zum Vermessen eines Messobjekts, genauer der Oberfläche eines Messobjekts, nach dem Oberbegriff von Patentanspruch 1.

Derartige Messvorrichtungen für eine berührungsfreie Vermessung von Messobjekten sind bereits in verschiedenen Ausführungen aus dem Stand der Technik bekannt, wobei berührungsfreie Vermessungen häufig mit kontaktierenden, d.h. mechanisch antastenden Vermessungen kombiniert werden.

Weiter sind derartige Messvorrichtungen sowohl zur eindimensionalen Vermessung nur in einer Koordinatenachse (z-Achse) als auch zur Mehrkoordinaten-Vermessung in Form von 2D- oder 3D-Messvorrichtungen, bei denen zusätzlich zur z-Koordinate des Messpunktes auf dem Messobjekt auch dessen x- und/oder y-Koordinate erfasst werden können, bekannt.

Eine solche Mehrkoordinaten-Messvorrichtung ist beispielsweise aus der DE 38 06 686 A1 bekannt. Bei der in dieser Druckschrift offenbarten Vorrichtung ist mittels eines Multisensortastsystems sowohl eine berührungsfreie als auch eine mechanisch antastende Vermessung eines Messobjekts möglich. Die Messpinolen des optischen Sensors für die berührungsfreie Vermessung und des mechanischen Tastkopfes für die mechanisch antastende Vermessung sind dabei an einem gemeinsamen oder an zwei separaten, in x- und in y-Koordinatenrichtung bewegbaren Schlitten montiert. Zur automatischen Konturerfassung des Messobjekts weist der optische Sensor einen Lasersensor auf.

Der in der DE 38 06 686 A1 offenbarte Lasersensor folgt der Oberflächenkontur des Messobjekts in konstantem Abstand und erreicht damit eine Konturerfassung in Echtzeit mit hoher Genauigkeit und hoher Scan-Geschwindigkeit. Diesem Messprinzip liegt ein sogenanntes Lichtschnittverfahren zugrunde, bei dem die reflektierende Oberfläche des Messobjekts als Referenz für die Scharfstellung, d.h. die Fokussierung benutzt wird. Der Lasersensor richtet einen Lichtstrahl über ein Objektiv auf die zu vermessende Oberfläche des Messobjekts, von welcher der Lichtstrahl reflektiert und über eine Optik auf eine mit mehreren Differenzdioden bestückte Empfängereinrichtung geleitet wird. Aufgrund des bei diesem System angewandten Abbildungsverfahrens wandert das von der Empfängereinrichtung empfangene Signal bei einer Defokussierung des Lichtstrahls auf der Oberfläche des Messobjekts aus und erzeugt ein Differenzsignal, welches einer Vorschubvorrichtung in Form eines Servomotors zugeführt wird. Die Vorschubvorrichtung positioniert den optischen Sensor entsprechend dem Differenzsignal in z-Koordinatenrichtung derart, dass die zu vermessende Oberfläche des Messobjekts wieder in der Fokusebene des Objektivs liegt. Die Position des optischen Sensors in z-Koordinatenrichtung wird über ein geeignetes Messsystem erfasst und einer Auswerteeinheit zugeführt.

Aufgrund der kontinuierlichen und automatischen Fokussierung des Messobjekts können mit einer derartigen Messvorrichtung hohe Messgenauigkeiten bei gleichzeitig hohen Scan-Geschwindigkeiten erzielt werden. Allerdings ist bei diesem System die ermittelte z-Koordinate eines Messpunktes auf dem Messobjekt mit einem sogenannten Schleppfehler behaftet. Dieser Schleppfehler entsteht, da die mechanische Nachregelung der Position des optischen Sensors in z-Koordinatenrichtung nicht exakt zeitgleich mit dem Ablesebefehl der Empfängereinrichtung ist, d.h. die Empfängereinrichtung liest einen Messwert für die z-Koordinate aus, der nicht genau einer exakten Fokussierung des Messobjekts entspricht. Dieser Fehler ist insbesondere abhängig von der Auflösung des Messsystems, der Scan-Geschwindigkeit und den geometrischen Fehlern z-Achse.

Des Weiteren offenbart das US-Patent Nr. 4,830,498 eine Messvorrichtung, auf welcher der Oberbegriff des anhängenden Anspruchs 1 basiert.

Weitere Messvorrichtungen, die eine Empfängereinrichtung mit einem positionsempfindlichen Empfänger verwenden, sind zum Beispiel aus den Dokumenten EP-A-0 248 479, DE 43 39 710 A1 und EP-A- 0 279 347 bekannt.

Ausgehend von diesem Stand der Technik liegt der vorliegenden Erfindung die Aufgabe zugrunde, eine Vorrichtung zum berührungsfreien Vermessen eines Messobjekts bereitzustellen, bei welcher der oben erläuterte Schleppfehler vermieden oder zumindest deutlich reduziert wird und außerdem vielfältige Messaufgaben durchgeführt werden können.

Diese Aufgabe wird durch eine Vorrichtung mit den Merkmalen von Patentanspruch 1 gelöst. Weitere vorteilhafte Ausgestaltungen und Weiterbildungen der erfindungsgemäßen Vorrichtung sind in den abhängigen Patentansprüchen angegeben.

Die Vorrichtung zum berührungsfreien Vermessen eines Messobjekts gemäß der Erfindung weist einen optischen Sensor, wobei der optische Sensor einen optischen Taster (insbesondere Lasertaster) mit einer Lichtquelle und einem Messobjektiv zum Richten eines Lichtstrahls auf ein Messobjekt und einer Empfängereinrichtung zum Erfassen eines von dem Messobjekt reflektierten Lichtstrahls und Erzeugen eines entsprechenden elektronischen Messsignals aufweist; eine Vorschubvorrichtung zum Verändern des Abstandes zwischen dem optischen Sensor und dem Messobjekt in z-Koordinatenrichtung in Abhängigkeit von dem von der Empfängereinrichtung erzeugten Messsignal; und eine Auswerteeinheit zum Bestimmen der Koordinaten des Messpunktes auf dem Messobjekt auf. Des weiteren ist die Empfängereinrichtung mit einem positionsempfindlichen Empfänger versehen, der innerhalb eines vorgegebenen Messfensters ein von der Auswerteeinheit auswertbares Messsignal erzeugt, das ein Maß für die Abweichung der Empfangsposition des reflektierten Lichtstrahls vom Schwerpunkt innerhalb des Messfensters angibt, und die Vorschubvorrichtung stellt den Abstand zwischen dem optischen Sensor und dem Messobjekt derart ein, dass der Empfänger der Empfängereinrichtung den von dem Messobjekt reflektierten Lichtstrahl innerhalb des Messfensters empfängt, so dass die Auswerteeinheit die Koordinaten des Messpunktes auf dem Messobjekt aus der Position des optischen Sensors und dem von der Empfängereinrichtung erzeugten Messsignal ermittelt kann.

Bei dieser Messvorrichtung muss die Fokussierung des Messobjekts bei einem Scan-Vorgang nicht kontinuierlich nachgeregelt werden, da die Auswerteeinheit die Messsignale innerhalb des gesamten Messfensters der Empfängereinrichtung auswerten kann. Hierdurch entfällt der oben beschriebene Schleppfehler, sofern das von dem Messobjekt reflektierte Licht von der Empfängereinrichtung innerhalb des Messfensters empfangen wird. Erst wenn des reflektierte Licht aus dem Messfenster heraus wandert, muss die Fokussierung des Messobjekts nachgeregelt werden. Somit eignet sich die Messvorrichtung der Erfindung insbesondere für Messobjekte mit sehr ebenen und flachen Oberflächen, wie sie häufig in der Halbleiterindustrie vorkommen. Bei einer gleichbleibend hohen Scan-Genauigkeit kann die Scan-Geschwindigkeit deutlich erhöht werden, da die mechanische Nachregelegung der Fokussierung ganz wegfällt oder zumindest minimiert wird, was zu deutlich verringerten Messzeiten führt.

Der positionsempfindliche Empfänger der Empfängereinrichtung erzeugt beispielsweise innerhalb des Messfensters ein Messsignal mit linearer Kennlinie bezüglich der Empfangsposition des reflektierten Lichts innerhalb des programmierten Messfensters, das in der Auswerteeinheit in digitale Messschritte aufteilbar ist, um daraus die Messwerte zu generieren.

Zur leichteren und/oder schnelleren Weiterverarbeitung der Messdaten kann es von Vorteil sein, als positionsempfindlichen Empfänger einen CCD-Chip zu verwenden, der direkt digitale Messdaten erzeugt.

Neben dem bereits beschriebenen Betriebsmodus _{"}1. Scan-Modus", bei dem der Abstand zwischen dem optischen Sensor und dem Messobjekt unverändert bleibt, wenn der Empfänger der Empfängereinrichtung den von dem Messobjekt reflektierten Lichtstrahl innerhalb des Messfensters empfängt, und der Abstand kontinuierlich derart eingestellt wird, dass der Empfänger der Empfängereinrichtung den von dem Messobjekt reflektierten Lichtstrahl innerhalb des Messfensters empfängt, sind mit der Vorrichtung der Erfindung auch zwei weitere Betriebsmodi möglich. Bei dem Betriebsmodus _{"}2.

Scan-Modus" wird der Abstand zwischen dem optischen Sensor und dem Messobjekt kontinuierlich derart eingestellt, dass der Empfänger der Empfängereinrichtung den von dem Messobjekt reflektierten Lichtstrahl im Schwerpunkt innerhalb des Messfensters empfängt. Dieser Betriebsmodus entspricht im wesentlichen dem bei der eingangs beschriebenen Messvorrichtung aus dem Stand der Technik bekannten Verfahren. Weiterhin sind auch Autofokus-Einzelpunktmessungen möglich, bei denen der Abstand zwischen dem optischen Sensor und dem Messobjekt für jeden Messpunkt einzeln derart eingestellt wird, dass der Empfänger der Empfängereinrichtung den von dem Messobjekt reflektierten Lichtstrahl grundsätzlich an beliebiger Stelle innerhalb des Messfensters empfängt.

Vorzugsweise ist außerdem die Sendeleistung der Lichtquelle in Abhängigkeit von der von der Empfängereinrichtung empfangenen Lichtintensität des von dem Messobjekt reflektierten Lichtstrahls steuerbar. Auf diese Weise kann der optische Sensor automatisch beispielsweise auf unterschiedliche Reflexionseigenschaften des Messobjekts reagieren und jederzeit ein ausreichend starkes Empfangssignal gewährleisten.

In einem bevorzugten Ausführungsbeispiel der Erfindung weist der optische Sensor neben dem erläuterten optischen Taster in Form eines Lasertasters weiter einen Videosensor zur Erfassung von Messpunkten auf dem Messobjekt auf. Hierbei sind der Lasertaster und der Videosensor vorzugsweise wahlweise einzeln unabhängig voneinander ansteuerbar oder nacheinander, in beliebig wechselnder Reihenfolge kombiniert einsetzbar.

Zur Erhöhung der Messgenauigkeit und der Anwendungsflexibilität ist es weiterhin von Vorteil, wenn der Videosensor in der optischen Achse der Fokussiereinrichtung auf dem gleichen Strahlengang wie der Lasertaster eingerichtet ist, d.h. der Laserstrahl des Lasertasters und das Licht des Videosensors durch das gleiche Messobjektiv mit der gleichen optischen Achse laufen und der Mittelpunkt des Laserflecks auf dem Messobjekt genau im Mittelpunkt des Videomessbereichs justiert ist, Somit erfassen der Lasertaster und der Videosensor immer den gleichen Messpunkt auf dem Messobjekt.

Zusätzlich kann die Messvorrichtung einen mechanischen Tastkopf zum mechanisch antastenden Erfassen von Messpunkten auf dem Messobjekt aufweisen. Derartige mechanische Tastköpfe sind aus dem Stand der Technik bereits hinlänglich bekannt. Vorzugsweise sind der mechanische Tastkopf und der Lasertaster und der Videosensor des optischen Sensors wahlweise unabhängig voneinander ansteuerbar oder derart ansteuerbar, dass sie in Zweier- oder Dreierkombinationen als Multisensorsystem nacheinander in beliebiger, wechselnder Reihenfolge miteinander einsetzbar sind.

Die Messvorrichtung der vorliegenden Erfindung wird nachfolgend anhand verschiedener bevorzugter Ausführungsbeispiele unter Bezugnahme auf die beiliegenden Zeichnungen näher erläutert. Darin zeigen:
- Fig. 1: eine schematische Darstellung des Funktionsprinzips eines ersten Ausführungsbeispiels einer Messvorrichtung gemäß der vorliegenden Erfindung;
- Fig. 2: eine schematische Darstellung des Funktionsprinzips eines zweiten bevorzugten Ausführungsbeispiels einer Messvorrichtung gemäß der vorliegenden Erfindung;
- Fig. 3: eine perspektivische Darstellung eines dritten Ausführungsbeispiels einer Messvorrichtung gemäß der vorliegenden Erfindung; und
- Fig. 4: eine perspektivische Darstellung eines vierten Ausführungsbeispiels einer Messvorrichtung gemäß der vorliegenden Erfindung.

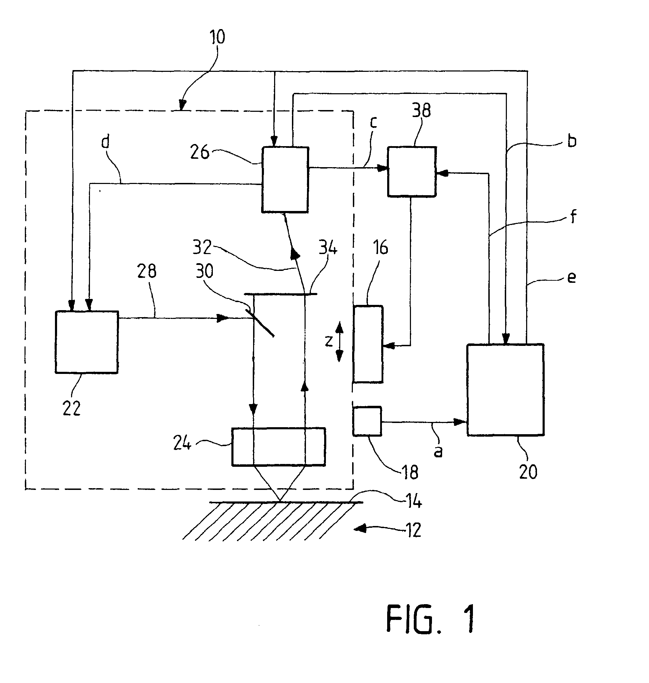

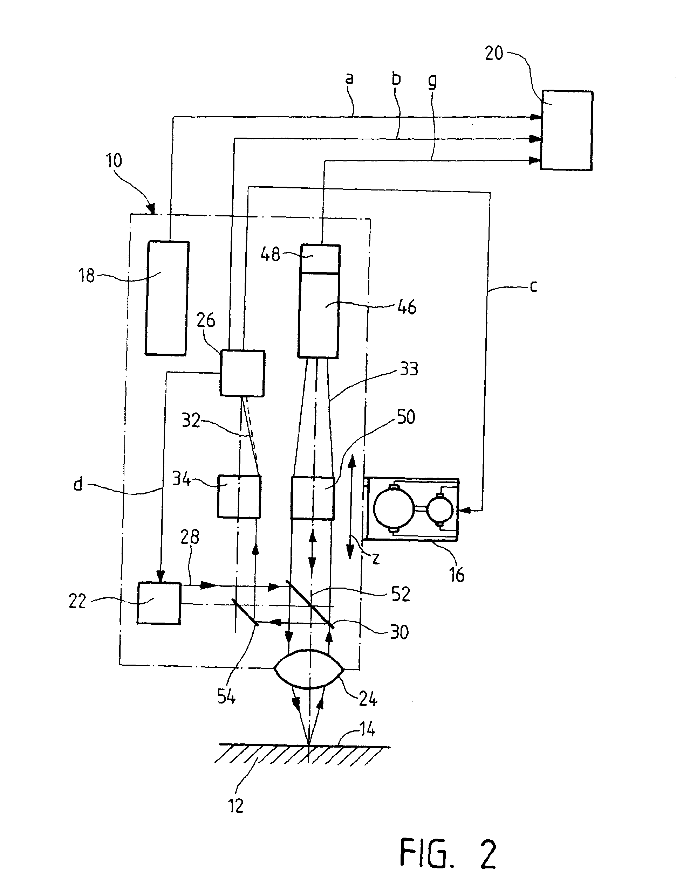

Zunächst werden anhand von Fig. 1 eine Messvorrichtung gemäß einem ersten Ausführungsbeispiel der Erfindung und das der Erfindung zugrundeliegende Funktionsprinzip erläutert. Anschließend werden anhand der Fig. 2 bis 4 weitere bevorzugte Ausführungsbeispiele der erfindungsgemäßen Messvorrichtung beschrieben. Zum besseren Verständnis sind gleiche Komponenten der Messvorrichtung in allen Figuren mit den gleichen Bezugszeichen versehen.

Der in Fig. 1 dargestellte optische Sensor 10 zur Vermessung eines Messobjekts 12 bzw. der Oberfläche 14 eines Messobjekts 12 ist an der Messvorrichtung vorzugsweise derart angebracht, dass er in der x-y-Ebene, d.h. der Ebene senkrecht zur Zeichnungsebene, verfahren werden kann. Hierdurch kann bei einem fixierten Messtisch für das Messobjekt 12 eine Relativbewegung zwischen optischem Sensor 10 und Messobjekt 12 sowohl in x-Koordinatenrichtung als auch in y-Koordinatenrichtung erzielt werden. Äquivalent zu diesem Aufbau ist eine Messvorrichtung, bei welcher der optische Sensor 10 in der x-y-Ebene fixiert, aber der Messtisch in der x-y-Ebene bewegbar ist, sodass wiederum die gewünschten Relativbewegungen zwischen Messobjekt 12 und optischem Sensor 10 realisierbar sind.

Der optische Sensor 10 ist ferner mittels einer Vorschubvorrichtung 16, wie beispielsweise eines Servomotors, in der z-Koordinatenrichtung verschiebbar. Die Position des optischen Sensors 10 in z-Koordinatenrichtung wird mittels einer geeigneten Messvorrichtung 18 erfasst und über eine Signalleitung a einer Auswerte- und/oder Steuereinheit 20 zugeführt. Als Messvorrichtung 18 eignet sich beispielsweise ein optisches Messsystem mit Glasmaßstab oder ein beliebiges anderes Positions-Messsystem.

Der optische Sensor 10 der Messvorrichtung von Fig. 1 enthält einen ersten optischen Taster in Form eines Lasertasters, der insbesondere eine Lichtquelle 22, ein Messobjektiv 24 und eine Empfängereinrichtung 26 aufweist. Die Lichtquelle 22, vorzugsweise eine Laserdiode oder Impuls-Laserdiode, sendet einen parallel gerichteten Laserstrahl 28 aus, der auf einen um 45° geneigten, Halbspiegel 30 trifft und von diesem in Richtung auf das zu vermessende Messobjekt 12 reflektiert wird. Der am Halbspiegel 30 reflektierte Laserstrahl 28 wird bei entsprechend eingestellter Positionierung des optischen Sensors 10 durch die Vorschubvorrichtung 16 in z-Koordinatenrichtung durch das Messobjektiv 24 auf die Oberfläche 14 des Messobjekts 12 fokussiert.

Der auf die Oberfläche 14 des Messobjekts 12 gerichtete Laserstrahl 28 wird an dieser reflektiert und durch das Messobjektiv 24 wieder parallel gerichtet. Der an dem Messobjekt 12 reflektierte Lichtstrahl 32 läuft dann an dem Halbspiegel 30 ungehindert vorbei und trifft auf eine Optik bzw. Linse 34. Diese Optik 34 fokussiert den reflektierten Lichtstrahl 32 auf einen Fangbereich der Empfängereinrichtung 26.

Es sei an dieser Stelle darauf hingewiesen, dass das Messobjektiv 24 vorzugsweise austauschbar an dem optischen Sensor 10 angebracht ist, sodass je nach Anwendungsfall verschiedene Messobjektive mit unterschiedlichen optischen Eigenschaften eingesetzt werden können. Gegebenenfalls müssen dann die anderen optischen Elemente des optischen Sensors in ihrer Anordnung an das ausgetauschte Messobjektiv angepasst werden, so dass der in Fig. 1 veranschaulichte Strahlengang gewährleistet ist.

Anstelle der beispielsweise in der bereits genannten DE 38 06 686 A1 verwendeten Differenzdioden ist die Empfängervorrichtung 26 der Messvorrichtung gemäß der Erfindung mit einem positionsempfindlichen Empfänger ausgebildet, der innerhalb eines programmierbaren Messfensters innerhalb seines Fangbereichs ein durch die Auswerteeinheit 20 auswertbares Messsignal generiert. Vorzugsweise wird ein positionsempfindlicher Empfänger benutzt, der innerhalb des Messfensters in Abhängigkeit von der Empfangsposition des reflektierten Lichtstrahls 32 ein Messsignal mit linearer Kennlinie bezüglich der Empfangsposition erzeugt. Der positionsempfindliche Empfänger kann zum Beispiel auch ein CCD-Chip sein, der direkt digitale Messdaten erzeugt.

Bei exakter Fokussierung der Oberfläche 14 des Messobjekts 12 durch die Fokussiereinrichtung 24, d.h. bei exakter Positionierung des optischen Sensors 10 in z-Koordinatenrichtung und damit exaktem Abstand zwischen dem optischen Sensor 10 und dem Messobjekt 12, empfängt die Empfängereinrichtung 26 das von dem Messobjekt 12 reflektierte Licht 32 genau im Schwerpunkt des programmierten Messfensters der Empfängereinrichtung. Wandert das Messobjekt 12 etwas aus dem Fokus heraus, so wandert auch das von dem Messobjekt 12 reflektierte Licht 32 aus dem Schwerpunkt des Messfensters heraus. Aufgrund der speziellen Wahl der Empfängereinrichtung 26 mit einem positionsempfindlichen Empfänger kann die Empfängereinrichtung 26 ein Messsignal erzeugen, das ein Maß für die Abweichung der Empfangsposition des reflektierten Lichts 32 von dem Schwerpunkt innerhalb des Messfensters angibt.

Das so erzeugte Messsignal wird über eine Signalleitung b an die Auswerte- und/oder Steuereinheit 20 geleitet. Die Auswerte- und/oder Steuereinheit 20 ist derart programmiert, dass sie aus dem ihr zugeführten Messsignal das Ausmaß der Abweichung der Empfangsposition des reflektierten Lichts 32 innerhalb des Messfensters von dem Schwerpunkt des Messfensters der Empfängereinrichtung 26 ermitteln kann. Im Fall einer linearen Kennlinie des Messsignals bezüglich dieser Positionsabweichung ist diese Auswertung besonders einfach und genau. Die vorliegende Erfindung ist aber selbstverständlich nicht nur auf Empfängereinrichtungen 26 mit einer solchen linearen Kennlinie beschränkt; es können beispielsweise auch Kennlinien mit quadratischer, logarithmischer oder dergleichen Funktionalität verwendet werden. Aus dem Ausmaß der Positionsabweichung ermittelt die Auswerte- und/oder Steuereinheit 20 dann die Abweichung in z-Koordinatenrichtung von der durch die Messvorrichtung 18 erfassten z-Position und somit die exakte z-Koordinate des Messpunktes auf dem Messobjekt 12.

Die Größe des Messfensters und des Fangbereichs der Empfängereinrichtung 26 können entweder fest vorgegeben oder durch den Benutzer in bestimmten Grenzen frei wählbar bzw. programmierbar sein. Je nach Ausführungsform der Empfängereinrichtung 26 und der optischen Elemente des optischen Sensors 10 kann die Größe des Messfensters einem Verschiebebereich in z-Koordinatenrichtung von bis zu 2.000 µm entsprechen.

Die Empfängereinrichtung 26 ist außerdem über eine Signalleitung c mit einer Steuereinheit 38 für die Vorschubvorrichtung 16 in z-Koordinatenrichtung verbunden. Wenn das von dem Messobjekt 12 reflektierte Licht 32 von der Empfängereinrichtung 26 nicht mehr innerhalb des vorgegebenen Messfensters empfangen wird, muss die z-Positionierung des optischen Sensors 10 durch ein entsprechendes Steuersignal von der Empfängereinrichtung 26 nachgeregelt werden. Im Gegensatz zu den eingangs beschriebenen herkömmlichen Messvorrichtungen entfällt aber die kontinuierliche Nachregelung der Fokussierung, sodass die oben beschriebenen Schleppfehler vermieden oder zumindest deutlich reduziert werden können. Dies gilt insbesondere für Messobjekte 12 mit ebenen oder sehr flachen Oberflächen 14, da hier nur selten Nachregelungen der Fokussierung erforderlich sind. Aufgrund der fehlenden kontinuierlichen Nachregelungen werden auch die Scan-Geschwindigkeit und die Genauigkeit der Messung deutlich erhöht.

Die Empfängereinrichtung 26 ist weiter über eine Signalleitung d mit der Lichtquelle 22 des Lasertasters verbunden. Auf diese Weise kann die Sendeleistung der Lichtquelle 22 auf das Reflexionsvermögen der Oberfläche 14 des Messobjekts 12 abhängig von der durch die Empfängereinrichtung 26 empfangenen Lichtintensität des reflektierten Lichts 32 automatisch geregelt werden.

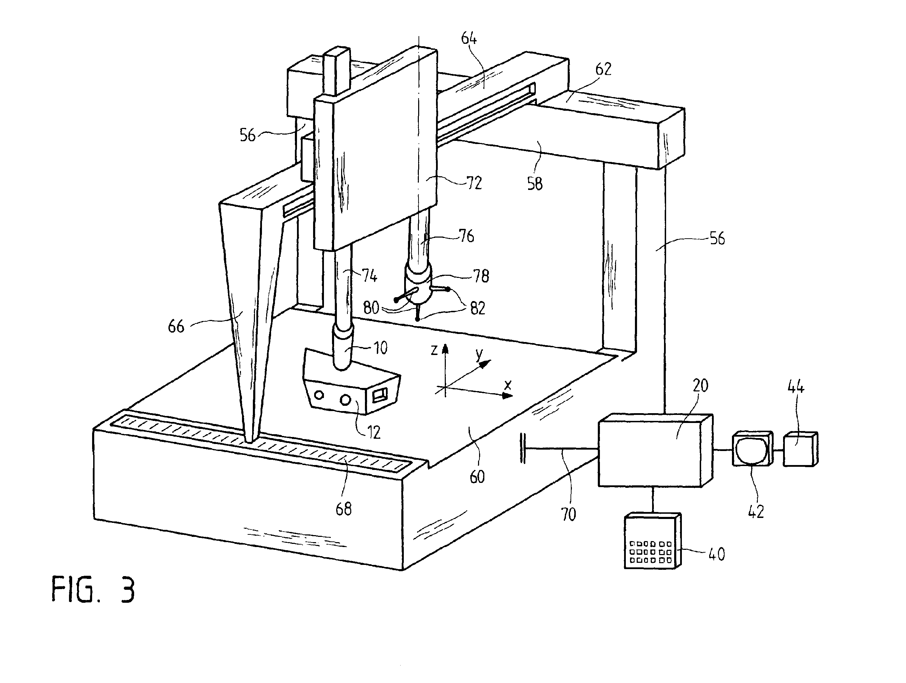

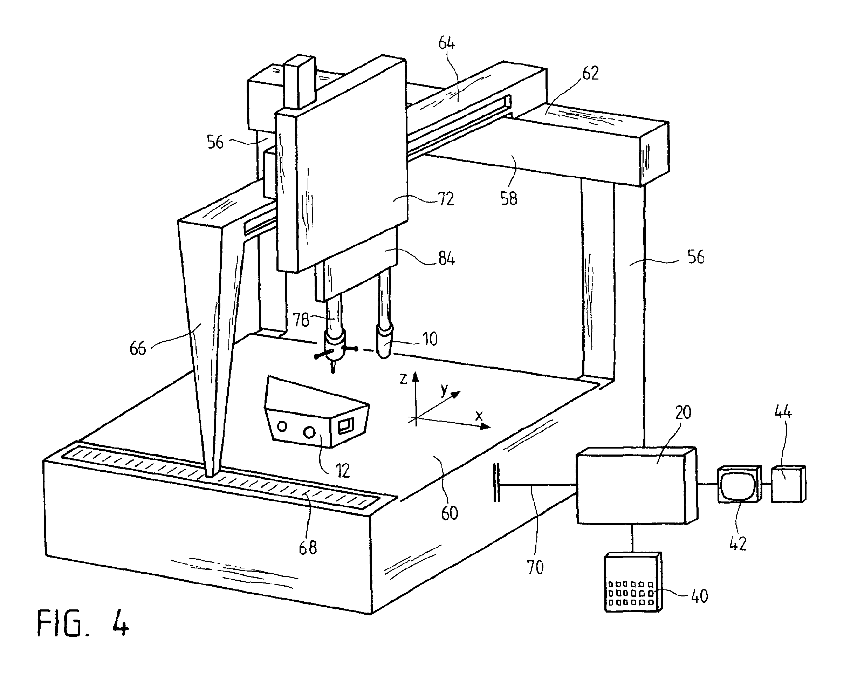

Die Auswerte- und/oder Steuereinheit 20 verarbeitet bei der Bestimmung der z-Koordinate des Messpunktes auf dem Messobjekt zusätzliche Daten, wie Reflexionseigenschaften und spezielle Materialcharakteristiken des Messobjekts und Charakteristiken der in dem optischen Sensor 10 verwendeten optischen Elemente. Darüber hinaus ist die Auswerte- und/oder Steuereinheit 20 über Signalleitungen e und f mit der Steuereinheit 38 der Vorschubvorrichtung 16, der Empfängereinrichtung 26 und der Lichtquelle 22 verbunden, um den Betrieb der Messvorrichtung zu steuern. Auch wenn dies in Fig. 1 nicht dargestellt ist, ist die Auswerte- und/oder Steuereinheit 20 weiter mit einer Eingabevorrichtung 40, einer Anzeigevorrichtung (Monitor) 42 und einer Ausgabevorrichtung (Drucker) 44 verbunden, wie dies in den später beschriebenen Fig. 3 und 4 gezeigt ist.

Neben dem oben beschriebenen Messverfahren, bei dem die Fokussierung des Messobjekts 12 beim Scannen nur nachgeregelt wird, wenn das reflektierte Licht 32 aus dem Messfenster der Empfängereinrichtung 26 heraus wandert und das hier auch als _{"}1. Scan-Modus" bezeichnet wird, sind mit der Messvorrichtung gemäß der vorliegenden Erfindung auch weitere Betriebsmodi, wie der _{"}2. Scan-Modus" und die "Einzelpunktmessung" möglich.

Im "2. Scan-Modus" wird die Fokussierung des Messobjekts 12 ähnlich wie bei den herkömmlichen Messvorrichtungen kontinuierlich nachgeregelt. Hierbei wird der Abstand zwischen dem optischen Sensor 10 und dem Messobjekt 12, d.h. die z-Positionierung des optischen Sensors 10, kontinuierlich derart eingestellt, dass der Empfänger der Empfängereinrichtung 26 den von dem Messobjekt 12 reflektierten Lichtstrahl 32 im Schwerpunkt innerhalb des programmierten Messfensters empfängt. Für Autofokus-Einzelpunktmessungen wird der Abstand zwischen dem optischen Sensor 10 und dem Messobjekt 12 für jeden Messpunkt einzeln derart eingestellt, dass der Empfänger der Empfängereinrichtung 26 den von dem Messobjekt reflektierten Lichtstrahl 32 an einer beliebigen Empfangsposition innerhalb des programmierten Messfensters empfängt.

Unter Bezugnahme auf Fig. 2 wird nun ein zweites Ausführungsbeispiel einer Messvorrichtung gemäß der vorliegenden Erfindung beschrieben. Die Messvorrichtung von Fig. 2 unterscheidet sich von der in Fig. 1 dargestellten Messvorrichtung im wesentlichen dadurch, dass der optische Sensor 10 neben dem Lasertaster nun auch einen Videosensor aufweist.

Wie in Fig. 2 dargestellt, weist der optische Sensor 10 des zweiten Ausführungsbeispiels zusätzlich eine Kamera 46 und eine mit der Auswerte- und/oder Steuereinheit 20 über eine Signalleitung g verbundene Bildverarbeitungsvorrichtung 48 auf, die Bestandteile des Videosensors sind. Der Videosensor des optischen Sensors 10 umfasst weiterhin den um 45° geneigten halbdurchlässigen Spiegel 30, das Messobjektiv 24 und eine Optik 50. Das von der Kamera 46 ausgesendete Licht 28 trifft auf den halbdurchlässigen Spiegel 30 und läuft durch ihn hindurch zu dem Messobjektiv 24. Das Messobjektiv 24 fokussiert den Lichtstrahl der Kamera 46 bei entsprechender Positionierung des optischen Sensors 10 in z-Koordinatenrichtung auf die Oberfläche 14 des zu vermessenden Messobjekts 12. Das von dem Messobjekt 12 reflektierte Licht 33 wird durch das Messobjektiv 24 wieder parallel gerichtet und läuft dann durch den um 45° geneigten halbdurchlässigen Spiegel 30 ungehindert hindurch und trifft anschließend auf die Optik bzw. Linse 50. Diese Optik 50 fokussiert den reflektierten Lichtstrahl 33 auf die Kamera 46.

Die Bestimmung der einzelnen Messpunkte eines zu vermessenden Messobjekts 12 erfolgt zum Beispiel anhand eines von der Bildverarbeitungsvorrichtung 48 aufbereiteten und einem Videoprozessor der Auswerteeinheit 20 digitalisierten Graubildes des Messobjektausschnitts. Die Messpunkte werden dabei an der äußeren Kontur des Messobjekts aufgenommen, und die jeweiligen Konturen in der x- und der y-Koordinatenrichtung werden durch Kantenfinderroutinen im Graubild erfasst, während in der z-Koordinatenrichtung die Messpunkte durch die ermittelten z-Koordinaten und unter Zuhilfenahme des Kamerabildes und/oder durch den Lasertaster bestimmt werden.

Der Lasertaster des optischen Sensors 10 von Fig. 2 weist wie in dem ersten Ausführungsbeispiel von Fig. 1 eine Laserlichtquelle 22, einen halbdurchlässigen Spiegel 30, ein Messobjektiv 24, eine Optik 34 und eine Empfängereinrichtung 26 auf. In dem bevorzugten zweiten Ausführungsbeispiel wird der Laserstrahl 28 der Lichtquelle 22 über den um 45° geneigten, halbdurchlässigen Spiegel 30 in den Strahlengang des Vidcosensors eingespiegelt, sodass das Messobjektiv 24 sowohl vom Lasertaster als auch vom Videosensor mit einer gemeinsamen optischen Achse 52 genutzt werden. Auf diese Weise wird von dem Lasertaster und dem Videosensor des optischen Sensors 10 immer der gleiche Messpunkt auf dem Messobjekt 12 erfasst, sodass ein Ausgleich eines Offsets zwischen den beiden Sensoren in der Auswerte- und/oder Steuereinheit 20 entfällt. Dieser Aufbau ist bereits aus der DE 38 06 686 A1 bekannt und dort näher erläutert.

Weiterhin ist in dem optischen Sensor 10 von Fig. 2 ein um 45° geneigter Halbspiegel 54 vorgesehen, um das von dem Messobjekt 12 und dem halbdurchlässigen Spiegel 30 reflektierte Licht 32 in Richtung auf die Optik 34 bzw. die Empfängereinrichtung 26 des Lasertasters umzulenken. Anstelle des hier gezeigten Halbspiegels 54 kann grundsätzlich auch ein halbdurchlässiger Spiegel verwendet werden.

Die Funktionsweise des Lasertasters entspricht derjenigen der in Fig. 1 dargestellten Messvorrichtung. D.h. insbesondere, dass die Empfängereinrichtung 26 ebenfalls einen positionsempfindlichen Empfänger mit einem programmierbaren Messfenster aufweist und der oben beschriebene Betriebsmodus "1. Scan-Modus" durchgeführt werden kann. Darüber hinaus können Lasertaster und Videosensor des optischen Sensors 10 von Fig. 2 wahlweise unabhängig voneinander oder kombiniert, d.h. nacheinander in beliebig wechselnder Reihenfolge betrieben werden.

Anhand von Fig. 3 wird nun ein weiteres bevorzugtes Ausführungsbeispiel der vorliegenden Erfindung näher beschrieben.

Fig. 3 zeigt in perspektivischer Darstellung die wesentlichen Komponenten einer Mehrkoordinaten-Messvorrichtung gemäß der vorliegenden Erfindung. Die Messvorrichtung ist eine in Portalbauweise aufgebaute Messmaschine mit einem feststehenden Portal, das aus zwei Seitenstützen 56, einer Traverse 58 und einem Messtisch 60 ausgebildet ist. Die Traverse 58 bildet gleichzeitig die Führungsbahn 62 für einen Querträger 64, der sich mit einer Stütze 66 auf einer zweiten Führungsbahn 68 auf dem Rand des Messtisches 60 abstützt. Der Querträger 64 ist entlang der beiden parallel angeordneten Führungsbahnen 62 und 68 bis gegen Endanschläge (nicht dargestellt) in x-Koordinatenrichtung über dem Messtisch 60 verfahrbar. Der Messtisch 60 ist beispielsweise als Drehmesstisch ausgebildet und in der x-y-Ebene fixiert.

Mit der Messmaschine ist über eine Signalleitung 70, welche zum Beispiel die Signalleitungen a bis g beinhaltet, mit der Auswerte- und/oder Steuereinheit 20 verbunden. Mit der Auswerte- und/oder Steuereinheit 20 sind außerdem eine Eingabevorrichtung 40 für den Benutzer, ein Monitor 42 und ein Drucker 44 verbunden. Die Steuerung der Komponenten der Messmaschine und die Auswertung der Messsignale erfolgt durch die Auswerte- und/oder Steuereinheit 20 in der oben anhand der in den Fig. 1 und 2 dargestellten Ausführungsbeispiele erläuterten Art und Weise.

An dem Querträger 64 der Messmaschine ist ein Schlitten 72 angebracht, der entlang des Querträgers 64 in y-Koordinatenrichtung bewegbar ist. Dieser Schlitten 72 nimmt zwei in z-Koordinatenrichtung verschiebbare Pinolen 74 und 76 auf. Alternativ können an dem Querträger 64 auch zwei separate, in y-Koordinatenrichtung bewegbare Schlitten vorgesehen sein, die jeweils eine der beiden Pinolen 74, 76 aufnehmen. Die beiden Schlitten können in diesem Fall unabhängig voneinander angesteuert werden.

Wie bereits weiter oben ausgeführt, ist es alternativ auch möglich, die Mehrkoordinaten-Messvorrichtung mit einem in der x-y-Ebene verfahrbaren Messtisch 60 und in x-y-Ebene fixierten Pinolen 64, 76 zu versehen, wodurch die gleichen Relativbewegungen zwischen dem Messobjekt 12 und dem optischen Sensor 10 und/oder dem mechanischen Taster 78 realisierbar sind.

Am unteren Ende der ersten Pinole 74 ist der optische Sensor 10 angebracht, der insbesondcrc gemäß einem der oben beschriebenen Ausführungsbeispiele der Fig. 1 und 2 aufgebaut sein kann. An der zweiten Pinole 76 ist ein mechanischer Tastkopf 78 angebracht. Dieser mechanische Tastkopf 78 weist zur Antastung des Messobjekts 12 in bekannter Weise wenigstens einen Taststift 80 mit einer Tastkugel 82 auf. Bezüglich des Aufbaus und der Funktionsweise des mechanischen Tastkopfes bestehen im Rahmen der vorliegenden Erfindung keine Einschränkungen.

Der mechanische Tastkopf 78 kann wahlweise unabhängig von dem optischen Sensor 10 angesteuert oder mit diesem kombiniert, d.h. in beliebiger wechselnder Reihenfolge gesteuert werden. Im Fall der in Fig. 1 dargestellten Messvorrichtung können also der Lasertaster und der mechanische Tastkopf wahlweise entweder unabhängig voneinander oder kombiniert betrieben werden. Wird stattdessen der optische Sensor 10 des zweiten Ausführungsbeispiels von Fig. 2 eingesetzt, können der Lasertaster, der Videosensor und der mechanische Tastkopf wahlweise entweder unabhängig voneinander oder in beliebiger Zweier- oder Dreierkombination miteinander kombiniert werden, um eine große Flexibilität bezüglich der zu bewältigenden Messaufgaben zu gewährleisten. Durch den kombinierten Einsatz der einzelnen Sensoren bzw. Taster können auch komplizierte Messaufgaben in kurzer Zeit durchgeführt und die Messergebnisse der einzelnen Systeme gegenseitig geprüft werden.

Fig. 4 zeigt schließlich ein viertes Ausführungsbeispiel einer Mehrkoordinaten-Messvorrichtung gemäß der vorliegenden Erfindung.

Die Messvorrichtung von Fig. 4 weist ebenfalls einen mechanischen Tastkopf 78 und einen optischen Sensor 10 auf, wobei der optische Sensor 10 wiederum entsprechend Fig. 1 oder Fig. 2 aufgebaut sein kann. Im Gegensatz zu dem dritten Ausführungsbeispiel sind die einzelnen Taster bzw. Sensoren 78, 10 nicht an zwei separaten Pinolen angebracht, sondern bilden einen einzigen Multisensortastkopf, der an einer gemeinsamen, in z-Koordinatenrichtung verstellbaren Pinole 84 befestigt ist. Auch bei dieser Bauform können der Lasertaster, der Videosensor und der mechanische Tastkopf wahlweise entweder unabhängig voneinander oder in beliebiger Zweier- oder Dreierkombination miteinander kombiniert werden.

## Patentansprüche

1. Vorrichtung zum Vermessen eines Messobjekts, mit
einem optischen Sensor (10), wobei der optische Sensor einen optischen Taster mit einer Lichtquelle (22) und einem Messobjektiv (24) zum Richten eines Lichtstrahls (28) auf ein Messobjekt (12) und einer Empfängereinrichtung (26) zum Erfassen eines von dem Messobjekt reflektierten Lichtstrahls (32) und Erzeugen eines entsprechenden Messsignals aufweist;
eine Vorschubvorrichtung (16) zum Verändern des Abstandes zwischen dem optischen Sensor (10) und dem Messobjekt (12) in einer ersten Koordinatenrichtung (z) in Abhängigkeit von dem von der Empfängereinrichtung (26) erzeugten Messsignal; und
einer Auswerteeinheit (20) zum Bestimmen der Koordinaten des Messpunktes auf dem Messobjekt, wobei
die Empfängereinrichtung (26) einen positionsempfindlichen Empfänger aufweist, der innerhalb eines Messfensters ein auswertbares Messsignal erzeugt das ein Maß für die Abweichung der Empfangsposition des reflektierten Lichtstrahls (32) vom Schwerpunkt innerhalb des Messfensters angibt;
die Vorschubvorrichtung (16) den Abstand zwischen dem optischen Sensor (10) und dem Messobjekt (12) derart einstellt, dass der Empfänger der Empfängereinrichtung (26) den von dem Messobjekt reflektierten Lichtstrahl (32) innerhalb des Messfensters empfängt; und
die Auswerteeinheit (20) die Koordinaten des Messpunktes auf dem Messobjekt (12) aus der Position des optischen Sensors (10) und dem von der Empfängereinrichtung (26) erzeugten Messsignal ermittelt, **dadurch gekennzeichnet,**
**dass** die Vorrichtung weiter eine Steuervorrichtung aufweist, mit der einer von mehreren Betriebsmodi des optischen Sensors auswählbar ist, wobei die Betriebsmodi ausgewählt sind aus der Gruppe der folgenden Betriebsmodi:
- der Abstand zwischen dem optischen Sensor (10) und dem Messobjekt (12) bleibt unverändert, wenn der Empfänger der Empfängereinrichtung (26) den von dem Messobjekt reflektierten Lichtstrahl (32) innerhalb des Messfensters empfängt, wird aber kontinuierlich derart eingestellt, dass der Empfänger der Empfängereinrichtung den von dem Messobjekt reflektierten Lichtstrahl innerhalb des Messfensters empfängt ("1. Scan-Modus"),
- der Abstand zwischen dem optischen Sensor (10) und dem Messobjekt (12) wird kontinuierlich derart eingestellt, dass der Empfänger der Empfängereinrichtung (26) den von dem Messobjekt reflektierten Lichtstrahl (32) im Schwerpunkt innerhalb des Messfensters empfängt ("2. Scan-Modus"), und
- der Abstand zwischen dem optischen Sensor (10) und dem Messobjekt (12) wird derart eingestellt, dass der Empfänger der Empfängereinrichtung (26) den von dem Messobjekt reflektierten Lichtstrahl (32) innerhalb des Messfensters empfängt ("Einzelpunktmessung").

2. Vorrichtung nach Anspruch 1,
**dadurch gekennzeichnet,**
**dass** der positionsempfindliche Empfänger der Empfängereinrichtung (26) innerhalb des Messfensters ein Messsignal mit linearer Kennlinie erzeugt, aus dem die Auswerteeinheit (20) einen Messwert generieren kann.

3. Vorrichtung nach Anspruch 1 oder 2,
**dadurch gekennzeichnet,**
**dass** der positionsempfindliche Empfänger der Empfängereinrichtung (26) ein CCD-Chip ist.

4. Vorrichtung nach einem der vorhergehenden Ansprüche,
**dadurch gekennzeichnet,**
**dass** die Größe des Messfensters der Empfängereinrichtung (26) programmierbar ist.

5. Vorrichtung nach einem der vorhergehenden Ansprüche,
**dadurch gekennzeichnet,**
**dass** die Lichtquelle (22) des optischen Sensors (10) eine Impuls-Laserdiode ist.

6. Vorrichtung nach einem der vorhergehenden Ansprüche,
**dadurch gekennzeichnet,**
**dass** die Sendeleistung der Lichtquelle (22) in Abhängigkeit von der von der Empfängereinrichtung (26) empfangenen Lichtintensität des von dem Messobjekt (12) reflektierten Lichtstrahls steuerbar ist.

7. Vorrichtung nach einem der vorhergehenden Ansprüche,
**dadurch gekennzeichnet,**
**dass** der optische Sensor (10) weiter einen Videosensor (46, 48) zur Erfassung von Messpunkten auf dem Messobjekt (12) aufweist.

8. Vorrichtung nach Anspruch 7,
**dadurch gekennzeichnet,**
**dass** der optische Taster (22, 26) und der Videosensor (46, 48) des optischen Sensors (10) wahlweise unabhängig voneinander oder kombiniert einsetzbar sind.

9. Vorrichtung nach Anspruch 7 oder 8,
**dadurch gekennzeichnet,**
**dass** der Videosensor (46, 48) in der optischen Achse (52) des Messobjektives (24) auf dem gleichen Strahlengang wie Lichtquelle (22) und Empfängereinrichtung (26) des optischen Tasters zur Erfassung eines gleichen Messpunktes auf dem Messobjekt (12) eingerichtet ist.

10. Vorrichtung nach einem der vorhergehenden Ansprüche,
**dadurch gekennzeichnet,**
**dass** die Vorrichtung weiter einen mechanischen Tastkopf (78) zum mechanisch antastenden Erfassen von Messpunkten auf dem Messobjekt (12) aufweist.

11. Vorrichtung nach Anspruch 10,
**dadurch gekennzeichnet,**
**dass** der mechanische Tastkopf (78) und der optische Taster (22, 26) und der Videosensor (46, 48) des optische Sensors (10) wahlweise unabhängig voneinander ansteuerbar oder in einer Zweier- oder Dreierkombination nacheinander in beliebiger, wechselnder Reihenfolge einsetzbar sind.

12. Vorrichtung nach Anspruch 10 oder 11,
**dadurch gekennzeichnet,**
**dass** der optische Sensor (10) und der mechanische Tastkopf (78) an einer gemeinsamen Pinole (84) der Vorrichtung angebracht sind.

13. Vorrichtung nach Anspruch 10 oder 11,
**dadurch gekennzeichnet,**
**dass** der optische Sensor (10) an einer ersten Pinole (74) der Vorrichtung angebracht ist und der mechanische Tastkopf (78) an einer zweiten Pinole (76) der Vorrichtung angebracht ist.

14. Vorrichtung nach Anspruch 13,
**dadurch gekennzeichnet,**
**dass** die erste und die zweite Pinole (74, 76) an einem gemeinsamen Messschlitten (72) angebracht sind oder unabhängig voneinander bewegbar sind.

15. Vorrichtung nach einem der Ansprüche 1 bis 14,
**dadurch gekennzeichnet,**
**dass** die Vorrichtung weiter eine Maschinensteuerungseinheit zum Bewegen des optischen Sensors (10) bzw. des optischen Sensors (10) und des mechanischen Tastkopfes (78) in wenigstens eine weitere Koordinatenrichtung (x, y) aufweist.

16. Vorrichtung nach einem der Ansprüche 1 bis 14,
**dadurch gekennzeichnet,**
**dass** die Vorrichtung weiter eine Maschinensteuerungseinheit zum Bewegen eines Messtisches in wenigstens eine weitere Koordinatenrichtung (x, y) aufweist.

## Claims

1. Device for measuring an object, comprising:
an optical sensor (10), the optical sensor having an optical detector with a light source (22) and a measuring lens (24) for directing a light beam (28) onto an object being measured (12) and a receiver device (26) for detecting a light beam (32) reflected by the object and producing a corresponding measurement signal;
a feed device (16) for altering the distance between the optical sensor (10) and the object being measured (12) in a first coordinate direction (z) in dependence on the measurement signal produced by the receiver device (26); and
an evaluating unit (20) for determining the coordinates of the measurement point on the object being measured, wherein
the receiver device (26) has a position-sensitive receiver producing, within a measurement window, a measurement signal which can be evaluated and
which indicates a measurement for the deviation of the receiving position of the reflected light beam (32) from the centre of gravity within the measurement window;
the feed device (16) adjusts the distance between the optical sensor (10) and
the object being measured (12) such that the receiver of the receiver device (26) receives within the measurement window the light beam (32) reflected by the object; and
the evaluating unit (20) ascertains the coordinates of the measurement point on the object being measured (12) from the position of the optical sensor (10) and from the measurement signal produced by the receiver device (26),
**characterized in that**
the device further has a control device with which one of a plurality of operating modes of the optical sensor can be selected, the operating modes being selected from the group of following operating modes:
- the distance between the optical sensor (10) and the object being measured (12) remains unchanged when the receiver of the receiver device (26) receives the light beam (32), reflected by the object, within the measurement window, but is continuously adjusted in such a way that the receiver of the receiver device receives the light beam, reflected by the object, within the measurement window ("1st scan mode"),
- the distance between the optical sensor (10) and the object being measured (12) is continuously adjusted in such a way that the receiver of the receiver device (26) receives the light beam (32), reflected by the object, in the centre of gravity within the measurement window ("2nd scan mode"), and
- the distance between the optical sensor (10) and the object being measured (12) is adjusted in such a way that the receiver of the receiver device (26) receives the light beam (32), reflected by the object, within the measurement window ("single point measurement").

2. Device according to claim 1,
**characterized in that**
the position-sensitive receiver of the receiver device (26) produces within the measurement window a measurement signal with linear characteristic from which the evaluating unit (20) can generate a measured value.

3. Device according to claim 1 or claim 2,
**characterized in that**
the position-sensitive receiver of the receiver device (26) is a CCD-chip.

4. Device according to any one of the preceding claims,
**characterized in that**
the size of the measurement window of the receiver device (26) is programmable.

5. Device according to any one of the preceding claims,
**characterized in that**
the light source (22) of the optical sensor (10) is a pulsed laser diode.

6. Device according to any one of the preceding claims,
**characterized in that**
the transmitting output of the light source (22) is controllable in dependence on the light intensity, of the light beam reflected by the object being measured (12), received by the receiver device (26).

7. Device according to any one of the preceding claims,
**characterized in that**
the optical sensor (10) further has a video sensor (46, 48) for detecting measurement points on the object being measured (12).

8. Device according to claim 7,
**characterized in that**
the optical detector (22, 26) and the video sensor (46, 48) of the optical sensor (10) may selectively be used independently of each other or in combination.

9. Device according to claim 7 or 8,
**characterized in that**
the video sensor (46, 48) is arranged in the optical axis (52) of the measuring lens (24) on the same path of rays as the light source (22) and receiver device (26) of the optical detector for detecting the same measurement point on the object being measured (12).

10. Device according to any one of the preceding claims,
**characterized in that**
the device further has a mechanical probe (78) for the mechanical detection, by probing, of measurement points on the object being measured (12).

11. Device according to claim 10,
**characterized in that**
the mechanical probe (78), the optical detector (22, 26) and the video sensor (46, 48) of the optical sensor (10) are selectively triggerable independently of one another or usable in a combination of two or three one after the other in any required, changing sequence.

12. Device according to claim 10 or 11,
**characterized in that**
the optical sensor (10) and the mechanical probe (78) are mounted on a common sleeve (84) of the device.

13. Device according to claim 10 or 11,
**characterized in that**
the optical sensor (10) is mounted on a first sleeve (74) of the device and the mechanical probe (78) is mounted on a second sleeve (76) of the device.

14. Device according to claim 13,
**characterized in that**
the first and second sleeves (74, 76) are mounted on a common measuring carriage (72) or are movable independently of each other.

15. Device according to any one of claims 1 to 14,
**characterized in that**
the device further has a machine control unit for moving the optical sensor (10), or the optical sensor (10) and the mechanical probe (78), in at least one further coordinate direction (x, y).

16. Device according to any one of claims 1 to 14,
**characterized in that**
the device further has a machine control unit for moving a measuring table in at least one further coordinate direction (x, y).

## Revendications

1. Dispositif pour mesurer un objet à mesurer, comprenant :
un capteur optique (10), le capteur optique possédant un palpeur optique qui comprend une source lumineuse (22) et un objectif de mesure (24) destiné à diriger un faisceau lumineux (28) sur un objet à mesurer (12) et un dispositif récepteur (26) destiné à détecter un faisceau lumineux (32) réfléchi par l'objet à mesurer, et à produire un signal de mesure correspondant ;
un dispositif d'avance (16) servant à faire varier la distance entre le capteur optique (10) et l'objet à mesurer (12) dans une première direction de coordonnées (z) en fonction du signal de mesure produit par le dispositif récepteur (26) ; et
une unité d'exploitation (20) destinée à déterminer les coordonnées du point de mesure sur l'objet à mesurer, dans lequel
le dispositif récepteur (26) comprend un récepteur sensible à la position, qui produit à l'intérieur d'une fenêtre de mesure un signal de mesure exploitable qui indique une valeur pour l'écart de la position de réception du faisceau lumineux réfléchi (32) par rapport au centre de gravité à l'intérieur de la fenêtre de mesure ;
le dispositif d'avance (16) règle la distance entre le capteur optique (10) et
l'objet à mesurer (12) de telle manière que le récepteur du dispositif récepteur (26) reçoive le faisceau lumineux (32) réfléchi par l'objet à mesurer à l'intérieur de la fenêtre de mesure ; et
l'unité d'exploitation (20) détermine les coordonnées du point de mesure sur l'objet à mesurer (12) à partir de la position du capteur optique (10) et du signal de mesure produit par le dispositif récepteur (26),
**caractérisé en ce que**
le dispositif comprend en outre un dispositif de commande avec lequel il est possible de sélectionner l'un de plusieurs modes de fonctionnement du capteur optique, les modes de fonctionnement étant sélectionnés dans le groupe des modes de fonctionnement suivants :
- la distance entre le capteur optique (10) et l'objet à mesurer (12) reste inchangée lorsque le récepteur du dispositif récepteur (26) reçoit le faisceau lumineux (32) réfléchi par l'objet à mesurer à l'intérieur de la fenêtre de mesure, mais est réglée continuellement de telle manière que le récepteur du dispositif récepteur reçoive le faisceau lumineux réfléchi par l'objet à mesurer à l'intérieur de la fenêtre de mesure ("premier mode de balayage"),
- la distance entre le capteur optique (10) et l'objet à mesurer (12) est réglée continuellement de telle manière que le récepteur du dispositif récepteur (26) reçoive le faisceau lumineux (32) réfléchi par l'objet à mesurer au centre de gravité à l'intérieur de la fenêtre de mesure ("deuxième mode de balayage"), et
- la distance entre le capteur optique (10) et l'objet à mesurer (12) est réglée de telle manière que le récepteur du dispositif récepteur (26) reçoive le faisceau lumineux (32) réfléchi par l'objet à mesurer à l'intérieur de la fenêtre de mesure ("mesure sur un point").

2. Dispositif selon la revendication 1,
**caractérisé**
**en ce que** le récepteur sensible à la position appartenant au dispositif récepteur (26) produit à l'intérieur de la fenêtre de mesure un signal de mesure ayant une caractéristique linéaire, à partir duquel l'unité d'exploitation (20) peut générer une valeur mesurée.

3. Dispositif selon la revendication 1 ou 2,
**caractérisé**
**en ce que** le récepteur sensible à la position appartenant au dispositif récepteur (26) est une puce CCD.

4. Dispositif selon une des revendications précédentes,
**caractérisé**
**en ce que** la dimension de la fenêtre de mesure du dispositif récepteur (26) est programmable.

5. Dispositif selon une des revendications précédentes,
**caractérisé**
**en ce que** la source lumineuse (22) du capteur optique (10) est une diode laser pulsée.

6. Dispositif selon une des revendications précédentes,
**caractérisé**
**en ce que** la puissance d'émission de la source lumineuse (22) peut être commandée en fonction de l'intensité lumineuse du faisceau lumineux réfléchi par l'objet à mesurer (12) qui est reçu par le dispositif récepteur (26).

7. Dispositif selon une des revendications précédentes,
**caractérisé**
**en ce que** le capteur optique comprend en outre un capteur vidéo (46, 48) destiné à détecter des points de mesure sur l'objet à mesurer (12).

8. Dispositif selon la revendication 7,
**caractérisé**
**en ce que** le capteur optique (22, 26) et le capteur vidéo (46, 48) du capteur optique (10) peuvent être utilisés sélectivement, indépendamment l'un de l'autre ou en combinaison.

9. Dispositif selon la revendication 7 ou 8,
**caractérisé**
**en ce que** le capteur vidéo (46, 48) est orienté, dans l'axe optique (52) de l'objectif de mesure (24), sur la même trajectoire de faisceau que la source lumineuse (22) et le dispositif récepteur (26) du capteur optique destiné à détecter un même point de mesure sur l'objet à mesurer (12).

10. Dispositif selon une des revendications précédentes,
**caractérisé**
**en ce que** le dispositif comprend en outre une sonde mécanique (78) destinée à détecter des points de mesure sur l'objet à mesurer (12) par contact mécanique.

11. Dispositif selon la revendication 10,
**caractérisé**
**en ce que** la sonde mécanique (78), le palpeur optique (22, 26) et le capteur vidéo (46, 48) du capteur optique (10) peuvent être, au choix, commandés indépendamment l'un de l'autre ou mis en oeuvre dans une combinaison binaire ou ternaire, l'un après l'autre, dans un ordre de succession quelconque et variable.

12. Dispositif selon la revendication 10 ou 11,
**caractérisé**
**en ce que** le capteur optique (10) et la sonde mécanique (78) sont montés sur un fourreau commun (84) du dispositif.

13. Dispositif selon la revendication 10 ou 11,
**caractérisé**
**en ce que** le capteur optique (10) est monté sur un premier fourreau (74) du dispositif et la sonde mécanique (78) est montée sur un deuxième fourreau (76) du dispositif.

14. Dispositif selon la revendication 13,
**caractérisé**
**en ce que** le premier fourreau et le deuxième fourreau (74, 76) sont montés sur un chariot de mesure commun (72) ou peuvent être déplacés indépendamment l'un de l'autre.

15. Dispositif selon une des revendications 1 à 14,
**caractérisé**
**en ce que** le dispositif comprend en outre une unité de commande de la machine servant à déplacer le capteur optique (10) ou le capteur optique (10) et la sonde mécanique (78) dans au moins une autre direction de coordonnées (x, y).

16. Dispositif selon une des revendications 1 à 14,
**caractérisé**
**en ce que** le dispositif comprend en outre une unité de commande de la machine servant à déplacer une table de mesure dans au moins une autre direction de coordonnées (x, y).
